# EUROPEAN PATENT APPLICATION

(11) **EP 4 215 554 A1**
(43) Date of publication of application: **26.07.2023**
(21) Application number: 21868977.6
(22) Date of filing: 30.06.2021
(51) Int. Cl.: C08F 210/02, C08K 5/205, C08L 23/08

(54) **RUBBER COMPOSITION**

(30) Priority: 15.09.2020 JP 2020154313
(71) Applicant: Unimatec Co., Ltd., Tokyo 105-0012 (JP)
(72) Inventor: WATANABE Daiki, Kitaibaraki-shi, Ibaraki 319-1544 (JP); TOMIKAWA Yoichiro, Kitaibaraki-shi, Ibaraki 319-1544 (JP)
(74) Representative: Gerauer, Marc Philippé
(86) International application number: PCT/JP2021/024691
(87) International publication number: WO 2022/059290

(57) **Abstract**

A rubber composition comprising: an ethylene-(meth)acrylate-based copolymer copolymerized at a ratio of 40 to 79.9 mol% of ethylene, 20.0 to 50.0 mol% of an alkyl (meth)acrylate containing an alkyl group having 1 to 8 carbon atoms and/or an alkoxyalkyl (meth)acrylate containing an alkoxyalkyl group having 2 to 8 carbon atoms, and 0.05 to 20.0 mol% of unsaturated dicarboxylic acid anhydride; a diurethane compound represented by the general formula:

R²(SO₂)ₘ(CH₂)ₙOCONH-R¹-NHCOO(CH₂)ₙ(SO₂)ₘR²

(wherein R¹ is a C₁-C₂₀ linear or branched divalent aliphatic alkylene group, a divalent alicyclic cycloalkylene group, or a divalent aromatic group; R² is a group that can be decomposed by the action of a basic vulcanization accelerator to generate diamine when it has a carbamate structure; n is 0, 1, or 2; and m is 0 or 1) as a vulcanizing agent; and a basic vulcanization accelerator. The rubber composition that can give a vulcanizate having excellent heat resistance, oil resistance, and molding processability.

## Description

### TECHNICAL FIELD

The present invention relates to a rubber composition. More particularly, the present invention relates to a rubber composition that can give a vulcanizate having excellent heat resistance, oil resistance, and molding processability.

### BACKGROUND ART

As a copolymer that gives a vulcanizate having excellent oil and heat resistance, Patent Document 1 has proposed a random copolymer comprising ethylene, methyl acrylate or ethyl acrylate, and 1,4-butenedioic acid monoalkyl ester as monomers. This copolymer is produced by polymerization at high pressure; however, due to the corrosive nature of 1,4-butenedioic acid monoalkyl ester, corrosion-resistant high-pressure equipment is required.

### PRIOR ART DOCUMENT

### PATENT DOCUMENT

Patent Document 1 : JP-A-50-49389
Patent Document 2 : JP-A-8-25586
Patent Document 3 : JP-B-7-94486
Patent Document 4 : JP-A-2010-235955

### OUTLINE OF THE INVENTION

### PROBLEM TO BE SOLVED BY THE INVENTION

An object of the present invention is to provide a rubber composition that can give a vulcanizate having excellent heat resistance, oil resistance, and molding processability.

### MEANS FOR SOLVING THE PROBLEM

The above object of the present invention can be achieved by a rubber composition comprising: an ethylene-(meth)acrylate-based copolymer copolymerized at a ratio of 40 to 79.9 mol% of ethylene, 20.0 to 50.0 mol% of an alkyl (meth)acrylate containing an alkyl group having 1 to 8 carbon atoms and/or an alkoxyalkyl (meth)acrylate containing an alkoxyalkyl group having 2 to 8 carbon atoms, and 0.05 to 20.0 mol% of unsaturated dicarboxylic acid anhydride; a diurethane compound represented by the general formula:

R²(SO₂)ₘ(CH₂)ₙOCONH-R¹-NHCOO(CH₂)ₙ(SO₂)ₘR²

(wherein R¹ is a C₁-C₂₀ linear or branched divalent aliphatic alkylene group, a divalent alicyclic cycloalkylene group, or a divalent aromatic group; R² is a group that can be decomposed by the action of a basic vulcanization accelerator to generate diamine when it has a carbamate structure; n is 0, 1, or 2; and m is 0 or 1) as a vulcanizing agent; and a basic vulcanization accelerator.

### EFFECT OF THE INVENTION

Vulcanizates obtained from the rubber composition according to the present invention have excellent heat resistance, oil resistance, and molding processability, and thus are effectively used as rubber parts in a wide range of fields, such as automobiles and other transportation equipment, industrial machinery, general equipment, and electrical equipment. Examples of such rubber parts include seals, gaskets, hoses, and the like, such as O rings, various packings, oil seals, bearing seals, head cover gaskets, plug tube gaskets, engine head cover gaskets, oil filter packings, oil pan gaskets, anti-vibration parts, oil hoses, fuel hoses, air hoses, air duct hoses, turbocharger hoses, PCV hoses, EGR hoses, and intercooler hoses.

### EMBODIMENTS FOR CARRYING OUT THE INVENTION

As the (meth)acrylate, at least one of an alkyl (meth)acrylate containing an alkyl group having 1 to 8 carbon atoms and an alkoxyalkyl (meth)acrylate containing an alkoxyalkyl group having 2 to 8 carbon atoms is used. These can be used singly or in combination of two or more thereof. Here, (meth)acrylate refers to acrylate or methacrylate.

Examples of the alkyl (meth)acrylate include methyl (meth)acrylate, ethyl (meth)acrylate, propyl (meth)acrylate, isopropyl (meth)acrylate, n-butyl (meth)acrylate, n-hexyl (meth)acrylate, 2-ethylhexyl (meth)acrylate, n-octyl (meth)acrylate, and the like. Alkyl groups having a longer chain are generally advantageous in terms of cold resistance, but are disadvantageous in terms of oil resistance. Alkyl groups having a shorter chain length show an opposite tendency. In terms of the balance between oil resistance and cold resistance, methyl acrylate, ethyl acrylate and n-butyl acrylate are preferably used. More Preferably, methyl acrylate is used.

Moreover, examples of the alkoxyalkyl (meth)acrylate include methoxymethyl (meth)acrylate, methoxyethyl (meth)acrylate, ethoxyethyl (meth)acrylate, n-butoxyethyl (meth)acrylate, ethoxypropyl (meth)acrylate, methoxyethoxyethyl (meth)acrylate, ethoxyethoxyethyl (meth)acrylate, and the like.

The unsaturated dicarboxylic acid anhydride is a compound having one or more radically polymerizable unsaturated bonds and one or more acid anhydride groups in the molecule. Examples thereof include maleic anhydride, citraconic anhydride, itaconic anhydride, 2,3-dimethylmaleic anhydride, 2-(2-carboxyethyl)-3-methylmaleic anhydride, 3,4,5,6-tetrahydrophthalic anhydride, phenylmaleic anhydride, 2,3-diphenylmaleic anhydride, allylsuccinic anhydride, (2-methyl-2-propenyl)succinic anhydride, 2-buten-1-ylsuccinic anhydride, cis-4-cyclohexene-1,2-dicarboxylic anhydride, 5-norbornene-2,3-dicarboxylic anhydride, bicyclo[2.2.2]oct-5-ene-2,3-dicarboxylic anhydride, and the like; preferably, maleic anhydride, itaconic anhydride, and citraconic anhydride are used. These can be used singly or in combination of two or more thereof.

In addition to the above monomers, if necessary, other copolymerizable monomers can also be used as long as the characteristics are not impaired. Examples of such copolymerizable monomers include vinyl compounds, such as styrene, vinyl toluene, α-methylstyrene, vinyl naphthalene, acrylonitrile, methacrylonitrile, acetone acrylamide, 2-hydroxyethyl acrylate, 4-hydroxybutyl acrylate, 2-hydroxy-3-chloropropyl (meth)acrylate, vinyl chloride, vinylidene chloride, vinyl fluoride, vinylidene fluoride, chloroethyl vinyl ether, hydroxyethyl vinyl ether, hydroxybutyl vinyl ether, pentafluoropropyl (meth)acrylate, and trifluoroethyl (meth)acrylate; diene compounds, such as isoprene, pentadiene, and butadiene; and α-olefins, such as propylene, 1-butene, 1-hexene, and 1-octene.

Furthermore, in order to improve kneading processability, extrusion processability, and other properties, a polyfunctional (meth)acrylate or oligomer can be further copolymerized. Examples thereof include di(meth)acrylates of alkylene glycols, such as ethylene glycol, propylene glycol, 1,4-butanediol, 1,6-hexanediol, and 1,9-nonanediol; di(meth)acrylates, such as neopentyl glycol, tetraethylene glycol, tripropylene glycol, and polypropylene glycol; bisphenol A•ethylene oxide adduct diacrylate, dimethylol tricyclodecane diacrylate, glycerol methacrylate acrylate, 3-acryloyloxy glycerol monomethacrylate, and the like.

Method for producing the copolymer is not particularly limited, and various polymerization methods, such as radical solution polymerization (Patent Documents 2 and 3), can be suitably used. In general, the copolymer can be produced using high-pressure low-density polyethylene production equipment and technology. For example, the copolymer is produced by a bulk polymerization method at a polymerization pressure of 70 to 350 MPa, preferably 100 to 250 MPa, or by a radical polymerization method at a polymerization temperature of 100 to 300°C, preferably 130 to 270°C. If the polymerization pressure is less than 70 MPa, the molecular weight of the polymer becomes low, and moldability and the resin physical properties of the resin composition deteriorate. In contrast, a polymerization pressure exceeding 350 MPa just increases the production cost and is practically meaningless. Further, if the polymerization temperature is less than 100°C, the polymerization reaction is not stable, and the conversion rate to the copolymer decreases, which is economically a problem. In contrast, if the polymerization temperature exceeds 300°C, the molecular weight of the copolymer is reduced, and the risk of runaway reactions arises at the same time.

Since radically polymerizable dicarboxylic acid anhydrides have poor polymerization stability, a high degree of homogenization in the reactor is required. Moreover, if necessary, multiple reactors can be connected in series or in parallel to carry out multistage polymerization. Further, more precise temperature control can be achieved by partitioning the inside of the reactor into multiple zones. It is also possible to adjust the polymerization reaction speed by adjusting the temperature of ethylene subjected to polymerization. The larger the temperature difference from the polymerization temperature is, the faster the polymerization reaction speed gets.

The polymerization reaction is carried out in the presence of at least one free radical polymerization initiator. As the free radical polymerization initiator used in radical polymerization, a compound that generates free radicals is selected. Examples thereof include oxygen; dialkyl peroxides, such as di-tert-butyl peroxide, tert-butyl cumyl peroxide, and dicumyl peroxide; diacyl peroxides, such as acetyl peroxide, isobutyl peroxide, and octanoyl peroxide; peroxydicarbonates, such as diisopropyl peroxydicarbonate and di(2-ethylhexylperoxy)dicarbonate; peroxyesters, such as tert-butyl peroxyisobutyrate, tert-butyl peroxyneodecanoate, tert-butyl peroxypivalate, and tert-butyl peroxylaurate; ketone peroxides, such as methyl ethyl ketone peroxide and cyclohexanone peroxide; peroxyketals, such as 1,1-bis-tert-butylperoxycyclohexane and 2,2-bis-tert-butylperoxyoctane; hydroperoxides, such as tert-butyl hydroperoxide and cumene hydroperoxide; azo compounds, such as 2,2-azobisisobutyronitrile; and the like.

Among the obtained ethylene-(meth)acrylate-based copolymers, in terms of obtaining vulcanizates having excellent heat resistance and molding processability, a copolymer copolymerized at 40 to 79.9 mol%, preferably 60 to 79.9 mol%, of ethylene, 15.0 to 50.0 mol%, preferably 20.0 to 35.0 mol%, of an alkyl (meth)acrylate containing an alkyl group having 1 to 8 carbon atoms and/or an alkoxyalkyl (meth)acrylate containing an alkoxyalkyl group having 2 to 8 carbon atoms, and 0.05 to 20.0 mol%, preferably 0.10 to 1.50 mol%, of unsaturated dicarboxylic acid anhydride is selected to prepare a rubber composition.

The vulcanizing agent for the ethylene-(meth)acrylate-based copolymer used herein is the diurethane compound disclosed in Patent Document 4 etc. represented by the general formula:

R²(SO₂)ₘ(CH₂)ₙOCONHR¹NHCOO(CH₂)ₙ(SO₂)ₘR²

(wherein R¹ is a C₁-C₂₀ linear or branched divalent aliphatic alkylene group, a divalent alicyclic hydrocarbon group, or a divalent aromatic group; R² is a group that can be decomposed by the action of a basic vulcanization accelerator to generate diamine when it has a carbamate structure, such as a C₁-C₂₀ alkyl group, an alkoxyl group, a phenoxy group, a haloalkyl group, an olefinic group, an aryl group or an aralkyl group, a fluorenyl-containing group, an S-containing group, an Si-containing group, an N-containing group, or a P-containing group, wherein the S-containing group or N-containing group is an aromatic or alicyclic heterocyclic group; n is 0, 1, or 2; and m is 0 or 1), preferably a diurethane compound obtained by di-substituting the amino group of alkylenediamine represented by the general formula H₂N(CH₂)₁NH₂ (l = 4 to 6) with 9-fluorenylmethyl chloroformate, more preferably a diurethane compound obtained by di-substituting the amino group of hexamethylenediamine (l=6), i.e., 1,6-bis[(9-fluorenylmethyl)carbamate]hexane: 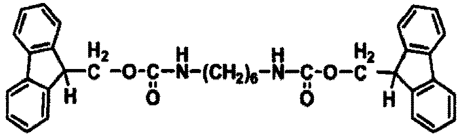 or 1,6-bis{[1-methyl-1-(4-methylphenyl)ethyl]carbamate}hexane:

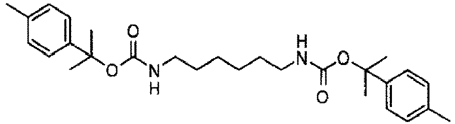

Such a polyamine compound vulcanizing agent is used at a ratio of about 0.1 to 10 parts by weight, preferably 0.5 to 5 parts by weight, based on 100 parts by weight of the copolymer rubber. If the compounding amount of the vulcanizing agent is less than this range, vulcanization is insufficient, which leads to deterioration of the mechanical properties of the vulcanizate and decrease of the vulcanization rate. If the compounding amount of the vulcanizing agent is greater than this range, excessive vulcanization may progress to reduce the elasticity of the vulcanizate. Further, if other vulcanizing agents are used, for example, if an amine-based vulcanizing agent is used, compound burning occurs. In the vulcanization, a basic vulcanization accelerator is used at a ratio of about 0.01 to 5 parts by weight, preferably 0.5 to 3 parts by weight, based on 100 parts by weight of the copolymer rubber.

The basic vulcanization accelerator used is a guanidine compound or a diazabicycloalkene compound, such as 1,8-diazabicyclo[5.4.0]undecene-7 and 1,5-diazabicyclo[4.3.0]nonene-5, or an organic acid salt or inorganic acid salt thereof. From the viewpoint of a higher addition effect, 1,8-diazabicyclo[5.4.0]undecene-7[DBU] is preferably used. Moreover, a mixture of 1,8-diazabicyclo[5.4.0]undecene-7 and silica can also be used. In practice, for example, Vulcofac ACT55, produced by Safic Alcan and the like are used.

Examples of the compound that forms an organic acid salt or inorganic acid salt of the diazabicycloalkene compound include hydrochloric acid, sulfuric acid, carboxylic acid, sulfonic acid, phenol, and the like. Examples of the carboxylic acid include octylic acid, oleic acid, formic acid, orthophthalic acid, adipic acid, and the like. Further, examples of the sulfonic acid include benzenesulfonic acid, toluenesulfonic acid, dodecylbenzenesulfonic acid, naphthalenesulfonic acid, and the like. These can be used singly or in combination of two or more thereof.

Usable examples of the guanidine compound include guanidine or substituted guanidine, such as aminoguanidine, 1,1,3,3-tetramethylguanidine, n-dodecylguanidine, methylolguanidine, dimethylolguanidine, 1-phenylguanidine, 1,3-diphenylguanidine, 1,3-di-o-tolylguanidine, triphenylguanidine, 1-benzyl-2,3-dimethylguanidine, cyanoguanidine, and the like. In addition, 1,6-guanidinohexane, guanylurea, biguanide, 1-o-tolylbiguanide, and the like can also be used.

The rubber composition comprising the above components may suitably contain, if necessary, various additives, such as reinforcing agents, fillers, processing aids, plasticizers, softeners, antioxidants, coloring agents, stabilizers, adhesive aids, mold release agents, conductivity-imparting agents, thermal conductivity-imparting agents, surface non-adhesive agents, tackifiers, flexibility-imparting agents, heat resistance-improving agents, flame retardants, ultraviolet absorbers, oil resistance-improving agents, anti-scorching agents, and lubricants.

Examples of the reinforcing agent, filler include silica, such as basic silica and acidic silica; metal oxides, such as magnesium oxide, zinc oxide, calcium oxide, titanium oxide, and aluminum oxide; metal hydroxides, such as magnesium hydroxide, aluminum hydroxide, and calcium hydroxide; metal carbonates, such as magnesium carbonate, aluminum carbonate, calcium carbonate, and barium carbonate; silicates, such as magnesium silicate, calcium silicate, sodium silicate, and aluminum silicate; sulfates, such as aluminum sulfate, calcium sulfate, and barium sulfate; synthetic hydrotalcite; metal sulfides, such as molybdenum disulfide, iron sulfide, and copper sulfide; diatomaceous earth, asbestos, lithopone (zinc sulfide/barium sulfide), graphite, carbon black (MT carbon black, SRF carbon black, FEF carbon black, HAF carbon black, etc.), fluorinated carbon, calcium fluoride, coke, quartz fine powder, zinc white, talc, mica powder, wollastonite, carbon fiber, aramid fiber, various whiskers, glass fiber, organic reinforcing agents, organic fillers, and the like.

Examples of the antioxidant include amine-based antioxidants, such as phenyl-α-naphthylamine, phenyl-β-naphthylamine, p-(p-toluenesulfonylamide)-diphenylamine, 4,4'-(α,α-dimethylbenzyl)diphenylamine, N,N-diphenyl-p-phenylenediamine, N-isopropyl-N'-phenyl-p-phenylenediamine, and butylaldehyde-aniline condensates; phenol antioxidants, such as 2,6-di-tert-butylphenol, butylhydroxyanisole, 2,6-di-tert-butyl-α-dimethylamino-p-cresol, octadecyl-3-(3,5-di-tert-butyl-4-hydroxyphenyl)propionate, mono (or di or tri) (α-methylbenzyl)phenol, 2,2'-methylene-bis(6-α-methylbenzyl-p-cresol), 4,4'-methylenebis(2,6-di-tert-butylphenol), 2,2'-methylenebis(4-methyl-6-tert-butylphenol), alkylated bisphenol, butylated reaction products of p-cresol and dicyclopentadiene, 1,3,5-tris(3',5'-di-tert-butyl-4'-hydroxybenzyl)isocyanurate, 1,1,3-tris(2-methyl-4-hydroxy-5-tert-butylphenyl)butane, butylidenebis(methyl-butylphenol), n-octadecyl 3-(4'-hydroxy-3',5'-di-tert-butylphenyl)propionate, pentaerythritol tetrakis[3-(3',5'-di-tert-butyl-4'-hydroxyphenyl)propionate], 2,2'-dimethyl-2,2'-(2,4,8,10-tetraoxaspiro[5.5]undecane-3,9-diyl)dipropane-1,1'-diylbis[3-(3-tert-butyl-4-hydroxy-5-methylphenyl)propanoate], 1,3,5-trimethyl-2,4,6-tris(3,5-di-tert-butyl-4-hydroxybenzyl)benzene, and 2,6-di-tert-butyl-4-methylphenol; phosphite-based antioxidants, such as 3,9-dioctadecan-1-yl-2,4,8,10-tetraoxa-3,9-diphosphaspiro[5.5]undecane, 3,9-bis(2,6-di-tert-butyl-4-methylphenoxy)-2,4,8,10-tetraoxa-3,9-diphosphaspiro[5.5]undecane, 2,4,8,10-tetra-tert-butyl-6-[(2-ethylhexan-1-yl)oxy]-12H-dibenzo[d,g][1,3,2]dioxaphosphosine, tris(2,4-di-tert-butylphenyl)phosphite, trisnonylphenyl phosphite, 2-ethylhexyl diphenyl phosphite, diphenyl isodecyl phosphite, triisodecyl phosphite, and triphenyl phosphite; other thiophenol-based antioxidants, sulfur ester-based antioxidants, imidazole-based antioxidants, quinoline-based antioxidants, hydroquinone-based antioxidants, and the like. These antioxidants can be used singly or in combination of two or more thereof.

Examples of the processing aid include higher fatty acids, such as stearic acid, oleic acid, palmitic acid, and lauric acid; higher fatty acid salts, such as sodium stearate and zinc stearate; higher fatty acid amides, such as amide stearate and amide oleate; higher fatty acid esters, such as ethyl oleate; petroleum-based waxes, such as carnauba wax and ceresin wax; polyglycols, such as ethylene glycol, glycerol, and diethylene glycol; aliphatic hydrocarbons, such as vaseline and paraffin; silicone-based oils, silicone-based polymers, low-molecular-weight polyethylene, phthalic acid esters, phosphoric acid esters, rosin, (halogenated) dialkyl amine, (halogenated) dialkyl sulfone, surfactants, and the like.

Examples of the plasticizer include epoxy resin and derivatives of phthalic acid and sebacic acid, and the like. Examples of the softener include lubricating oil, process oil, coal tar, castor oil, and calcium stearate, and the like.

The preparation of the composition is carried out by adding a reinforcing agent, a stabilizer, a processing aid, and the like to an ethylene-(meth)acrylate-based copolymer using an open roll or a closed kneader, and then further adding a vulcanizing agent and a vulcanization accelerator. Vulcanization molding is carried out by performing primary vulcanization at about 150 to 200°C for about 1 to 30 minutes, optionally followed by secondary vulcanization (secondary vulcanization) at about 150 to 200°C for about 1 to 16 hours. For molding, known methods, such as press molding, transfer molding, injection molding, and extrusion molding, can be applied depending on the product.

### EXAMPLES

The following describes the present invention with reference to Examples.

### Polymerization Examples 1 to 7

In Polymerization Example 1, high-pressure method low-density polyethylene plant equipment with a 5 L autoclave was used, and monomers were injected into a reactor so that the monomer composition at the reactor inlet was 93.96 wt% of ethylene [E], 5.87 wt% of methyl acrylate [MA], and 0.17 wt% of maleic anhydride [MAH]. Di-2-ethylhexyl peroxydicarbonate was used as a reaction initiator, and the polymerization was carried out under the condition of a polymerization temperature of 140°C and a polymerization pressure of 165 MPa. In other polymerization examples, various copolymers shown in Table 1 were obtained by adjusting the monomer composition, polymerization temperature, and polymerization pressure. The copolymerization composition ratio indicates the monomer composition in the resulting terpolymer.

| Table 1 | | | | | | | | | | | |
|---|---|---|---|---|---|---|---|---|---|---|---|
| | | | | | | | | | | | |
| | MFR | Tg | Copolymerization composition ratio | | | Polymerization conditions | | | | | |
| Measurement | | | MA content | MAH content | E content | Polymerizatio n temperature | Polymerizatio | Monomer composition | | | Copolymerizatio n rate |
| item | | | | | | | n pressure | ethylene | MA | MAH | |
| | g/10min | °C | mol% | mol% | mol% | °C | MPa | wt% | wt% | wt% | kg/hr |
| Polymerization Example 1 | 49 | -36.8 | 19.1 | 1.09 | 79.9 | 140 | 165 | 94.0 | 5.9 | 0.17 | 200 |
| Polymerization Example 2 | 54 | -24.7 | 32.8 | 0.88 | 66.3 | 140 | 165 | 89.5 | 10.3 | 0.19 | 2.40 |
| Polymerization Example 3 | 17 | -29.3 | 27.8 | 0.48 | 71.7 | 163 | 170 | 92.0 | 7.9 | 0.06 | 1.55 |
| Polymerization Example 4 | 12.9 | -29.1 | 27.5 | 0.47 | 72.0 | 159 | 170 | 92.8 | 7.2 | 0.05 | 1.25 |
| Polymerization Example 5 | 16.8 | -27.9 | 29.1 | 0.56 | 70.3 | 160 | 170 | 92.2 | 7.8 | 0.06 | 1.14 |
| Polymerization Example 6 | 12.5 | -29.2 | 27.9 | 0.46 | 71.7 | 159 | 170 | 92.7 | 7.2 | 0.05 | 0.83 |
| Polymerization Example 7 | 12.5 | -28.1 | 29.2 | 0.48 | 70.3 | 175 | 165 | 89.5 | 10.4 | 0.11 | 3.05 |

### Example 1

| | |
|---|---|
| Terpolymer obtained in Polymerization Example 1 | 100 parts by weight |
| Stearic acid | 2 parts by weight |
| Amine-based antioxidant (Nocrac CD, produced by Ouchi Shinko Chemical Industrial Co., Ltd.) | 2 parts by weight |
| FEF carbon black (Seast GS, produced by Tokai Carbon Co., Ltd.) | 50 parts by weight |
| Phosphoric acid half ester (Phosphanol RL210, produced by Toho Chemical Industry Co., Ltd.) | 1 part by weight |
| Stearyl amine (Farmin 80, produced by Kao Corporation) | 1 part by weight |

Each of the above components was kneaded using a 1 L kneader (DS1-5MHB-E, produced by Moriyama).

Subsequently, using an 8-inch roll (produced by Otake Kikai Kogyo K.K.), 156 parts by weight of the 1 L kneader-kneaded compound was compounded with 4 parts by weight of 1,6-bis[(9-fluorenylmethyl)carbamate]hexane and 2 parts by weight of DBU-dodecane dihydrochloride (70% product), thereby producing a composition for evaluating rubber physical properties. The obtained kneaded composition was subjected to primary vulcanization at 180°C for 10 minutes and oven vulcanization (secondary vulcanization) at 175°C for 4 hours, thereby molding a vulcanization sheet and a block for measuring compression set according to JIS.

The obtained composition and molded product were measured for each of the following items.
MFR: according to JIS K 7210 corresponding to ISO 1133
Measurement conditions: the melt flow rate was measured under the conditions of 190°C and 2.16 Kg.
Cold resistance: model: SII DSC6220
Measurement conditions: the temperature at which the differential peak of the DSC curve was obtained at -100°C to 100°C at a heating rate of 10°C/min was regarded as Tg.
Oil resistance: according to JIS K 6258 corresponding to ISO 1817
150°C/70 hrs; swelling with test oil IRM 903 was evaluated.

### • Main monomer composition ratio (MA/E): measured by IR (mol%)

A baseline was drawn at 4600 cm⁻¹ and 3500 cm⁻¹, and the 4254 cm⁻¹ peak height derived from ethylene was measured.

A 1-point baseline was drawn at 3510 cm⁻¹, and the 3457 cm⁻¹ peak height derived from MA was measured.

The A3457/A4254 peak ratio was calculated, and it was calculated from a calibration curve created by separately measuring the MA content by NMR.

### • MAH content: measured by IR (mol%)

A 1-point baseline was drawn at 4600 cm⁻¹, and the 4254 cm⁻¹ peak height derived from ethylene was measured.

A baseline was drawn at 1875 cm⁻¹ and 1825 cm⁻¹, and the 1855 cm⁻¹ peak height derived from MAH was measured.

The MAH content was calculated from A1855/A4254 using a calibration curve of MAH content and IR absorbance ratio by a titration method.

### • Composition (mol%) of a copolymer comprising ethylene-(meth)acrylate-acid anhydride as comonomers calculated from the main monomer composition ratio (MAlE) and the MAH content

Mooney viscosity scorch: according to JIS K 6300 corresponding to ISO 289 model: AM-4 (produced by Toyo Seiki Seisaku-sho, Ltd.), 125°C

Normal state value: according to JIS K 6253 corresponding to ISO 37, and 6251 corresponding to ISO 37

Heat aging resistance: according to JIS K 6257 corresponding to ISO 188 175°C/70 hrs; hardness changes were evaluated.

Compression set: according to JIS K 6262 corresponding to ISO 815-1 175°C/70 hrs, 25% compression

### Example 2

In Example 1, the same amount (100 part by weight) of the terpolymer obtained in Polymerization Example 2 was used as the terpolymer.

### Example 3

In Example 1, the same amount (100 part by weight) of the terpolymer obtained in Polymerization Example 3 was used as the terpolymer.

### Comparative Example 1

In Example 1, 1.25 parts by weight of hexamethylenediamine carbamate (CHEMINOX AC-6, produced by Unimatec Co., Ltd.) was used in place of 1,6-bis[(9-fluorenylmethyl)carbamate]hexane as the vulcanizing agent.

### Comparative Example 2

In Comparative Example 1, 5 parts by weight of 2,2-bis[4-(4-aminophenoxy)phenyl]propane 50% masterbatch (CHEMINOX CLP5250, produced by Unimatec Co., Ltd.) was used in place of hexamethylenediamine carbamate as the vulcanizing agent.

### Example 4

In Example 3, kneading was performed using MIXTRON BB 3.6 L (produced by KOBELCO) in place of the 1 L kneader.

### Comparative Example 3

In Example 4, 1.25 parts by weight of hexamethylenediamine carbamate (CHEMINOX AC-6) was used in place of 1,6-bis[(9-fluorenylmethyl)carbamate]hexane.

### Example 5

In Example 4, the same amount (100 part by weight) of the terpolymer obtained in Polymerization Example 4 was used as the terpolymer.

### Comparative Example 4

In Example 5, 1.25 parts by weight of hexamethylenediamine carbamate (CHEMINOX AC-6) was used in place of 1,6-bis[(9-fluorenylmethyl)carbamate]hexane.

### Example 6

In Example 4, the same amount (100 part by weight) of the terpolymer obtained in Polymerization Example 5 was used as the terpolymer.

### Comparative Example 5

In Example 6, 1.25 parts by weight of hexamethylenediamine carbamate (CHEMINOX AC-6) was used in place of 1,6-bis[(9-fluorenylmethyl)carbamate]hexane.

### Example 7

In Example 4, the same amount (100 part by weight) of the terpolymer obtained in Polymerization Example 6 was used as the terpolymer.

### Comparative Example 6

In Example 7, 1.25 parts by weight of hexamethylenediamine carbamate (CHEMINOX AC-6) was used in place of 1,6-bis[(9-fluorenylmethyl)carbamate]hexane.

### Example 8

In Example 4, the same amount (100 part by weight) of the terpolymer obtained in Polymerization Example 7 was used as the terpolymer.

### Example 9

In Example 8, 4 parts by weight of di-o-tolylguanidine (Nocceler DT, produced by Ouchi Shinko Chemical Industrial Co., Ltd.) was used in place of DBU-dodecane dihydrochloride.

### Example 10

In Example 8, 3.34 parts by weight of 1,6-bis[[1-methyl-1-(4-methylphenyl) ethyl]carbamate]hexane was used in place of 1,6-bis[(9-fluorenylmethyl)carbamate]hexane as the vulcanizing agent.

### Comparative Example 7

In Example 8, 1.25 parts by weight of hexamethylenediamine carbamate (CHEMINOX AC-6) was used in place of 1,6-bis[(9-fluorenylmethyl)carbamate]hexane.

The results obtained in the above Examples are shown in the following Table 2. In all of the comparative examples, compound burning occurred during kneading, and the characteristics could not be measured.

| Table 2 | | | | | | | | | | | | |
|---|---|---|---|---|---|---|---|---|---|---|---|---|
| | | | | | | | | | | | | |
| Measurement item | | | Ex.1 | Ex.2 | Ex3 | Ex.4 | Ex.5 | Ex.6 | Ex.7 | Ex.8 | Ex.9 | Ex.10 |
| M1 min (125°C) | | (pts) | 6 | 6 | 15 | 15 | 15 | 15 | 15 | 9 | 13 | 9 |
| t5 | | (min) | 15 or more | 15 or more | 15 or more | 15 or more | 15 or more | 15 or more | 15 or more | 20 or more | 8.9 | 20 or more |
| Hardness (Duro A) | | (pts) | 64 | 67 | 64 | 64 | 65 | 61 | 63 | 63 | 57 | 64 |
| 100% modulus | | (MPa) | 3.6 | 4.3 | 2.7 | 2.7 | 2.8 | 2.5 | 2.4 | 2.7 | 2.0 | 2.6 |
| Tensile strengs | | (MPa) | 12.8 | 15.5 | 15.1 | 15.1 | 15.2 | 13.5 | 14.9 | 16.3 | 15.3 | 16.6 |
| Elongation at break | | (%) | 360 | 365 | 437 | 437 | 413 | 408 | 445 | 430 | 530 | 415 |
| Compression set (175°C, 70hr) | | (%) | 12 | 15 | 21 | 21 | 20 | 18 | 19 | 16 | 24 | 25 |
| Heat resistance (175°C, 70hr) | | | | | | | | | | | | |
| | Hardness change | (pts) | +5 | +5 | +3 | +3 | +2 | +6 | +3 | +6 | +5 | +2 |
| Oil resistance (150°C, 70hr, IRM 903oil) | | | | | | | | | | | | |
| ΔV100 | | (%) | +99.0 | +58.2 | +65.5 | +64.3 | +66.5 | +63.4 | +62.3 | +68.6 | +73.1 | +72.6 |

## Claims

1. A rubber composition comprising: an ethylene-(meth)acrylate-based copolymer copolymerized at a ratio of 40 to 79.9 mol% of ethylene, 20.0 to 50.0 mol% of an alkyl (meth)acrylate containing an alkyl group having 1 to 8 carbon atoms and/or an alkoxyalkyl (meth)acrylate containing an alkoxyalkyl group having 2 to 8 carbon atoms, and 0.05 to 20.0 mol% of unsaturated dicarboxylic acid anhydride; a diurethane compound represented by the general formula:
R²(SO₂)ₘ(CH₂)ₙOCONH-R¹-NHCOO(CH₂)ₙ(SO₂)ₘR²
(wherein R¹ is a C₁-C₂₀ linear or branched divalent aliphatic alkylene group, a divalent alicyclic cycloalkylene group, or a divalent aromatic group; R² is a group that can be decomposed by the action of a basic vulcanization accelerator to generate diamine when it has a carbamate structure; n is 0, 1, or 2; and m is 0 or 1) as a vulcanizing agent; and a basic vulcanization accelerator.

2. The rubber composition according to claim 1, wherein the diurethane compound is 1,6-bis[(9-fluorenylmethyl)carbamate]hexane: 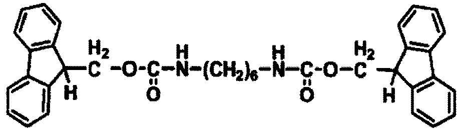 or 1,6-bis{[1-methyl-1-(4-methylphenyl)ethyl]carbamate}hexane:

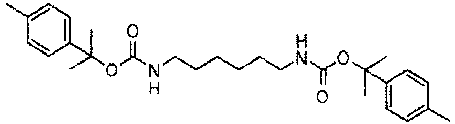

3. The rubber composition according to claim 1, wherein the alkyl (meth)acrylate is methyl acrylate.

4. The rubber composition according to claim 1, wherein the unsaturated dicarboxylic acid anhydride is maleic anhydride.

5. The rubber composition according to claim 1, wherein the diurethane compound as a vulcanizing agent is used at a ratio of 0.1 to 10 parts by weight, and the guanidine compound as a basic vulcanization accelerator is used at a ratio of 0.01 to 5 parts by weight, based on 100 parts by weight of the ethylene-(meth)acrylate-based copolymer.

6. A vulcanized molded article of the rubber composition according to claim 1.

## Amended claims

### Amended claims under Art. 19.1 PCT

1. (Amended) A rubber composition comprising: an ethylene-(meth)acrylate-based copolymer copolymerized at a ratio of 60 to 79.9 mol% of ethylene, 20.0 to 35.0 mol% of an alkyl (meth)acrylate containing an alkyl group having 1 to 8 carbon atoms and/or an alkoxyalkyl (meth)acrylate containing an alkoxyalkyl group having 2 to 8 carbon atoms, and 0.1 to 1.5 mol% of unsaturated dicarboxylic acid anhydride; a diurethane compound represented by the general formula:
R²(SO₂)ₘ(CH₂)ₙOCONH-R¹-NHCOO(CH₂)ₙ(SO₂)ₘR²
(wherein R¹ is a C₁-C₂₀ linear or branched divalent aliphatic alkylene group, a divalent alicyclic cycloalkylene group, or a divalent aromatic group; R² is a group that can be decomposed by the action of a basic vulcanization accelerator to generate diamine when it has a carbamate structure; n is 0, 1, or 2; and m is 0 or 1) as a vulcanizing agent; and a basic vulcanization accelerator.

2. The rubber composition according to claim 1, wherein the diurethane compound is 1,6-bis[(9-fluorenylmethyl)carbamate]hexane: 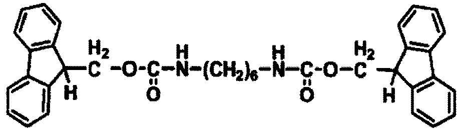 or 1,6-bis{[1-methyl-1-(4-methylphenyl)ethyl]carbamate}hexane:

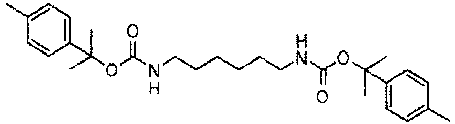

3. The rubber composition according to claim 1, wherein the alkyl (meth)acrylate is methyl acrylate.

4. The rubber composition according to claim 1, wherein the unsaturated dicarboxylic acid anhydride is maleic anhydride.

5. The rubber composition according to claim 1, wherein the diurethane compound as a vulcanizing agent is used at a ratio of 0.1 to 10 parts by weight, and the guanidine compound as a basic vulcanization accelerator is used at a ratio of 0.01 to 5 parts by weight, based on 100 parts by weight of the ethylene-(meth)acrylate-based copolymer.

6. A vulcanized molded article of the rubber composition according to claim 1.

Statement under Art. 19.1 PCT
The copolymerization ratio specified in claim 1 was limited to the preferable range of each monomer ratio described in paragraph [0016].

As described in paragraph [0049], there is a significant difference in the effect of oil resistance between Example 1, which becomes a comparative example in accordance with the present amendment, and the other Examples.
